# EUROPEAN PATENT SPECIFICATION

(11) **EP 3 160 112 B1**
(45) Date of publication and mention of the grant of the patent: **14.07.2021**
(21) Application number: 16191638.2
(22) Date of filing: 30.09.2016
(51) Int. Cl.: H04L 29/08

(54) **REMINDING METHOD AND DEVICE**
ERINNERUNGSVERFAHREN UND -VORRICHTUNG
PROCÉDÉ ET DISPOSITIF DE RAPPEL

(30) Priority: 30.09.2015 CN 201510640419
(43) Date of publication of application: 26.04.2017
(73) Proprietor: Xiaomi Inc., Beijing 100085 (CN)
(72) Inventor: LIU, Daokuan, Haidian District, Beijing 100085 (CN); TANG, Yao, Haidian District, Beijing 100085 (CN); LIU, Shuai, Haidian District, Beijing 100085 (CN); YANG, Chunhe, Haidian District, Beijing 100085 (CN); XING, Xinyan, Haidian District, Beijing 100085 (CN)
(74) Representative: Steinbauer, Florian

(56) References cited:
- WO-A1-2013/056528
- WO-A1-2015/078395
- US-A1- 2014 047 051
- US-A1- 2014 180 744

## Description

### TECHNICAL FIELD

The present disclosure generally relates to the field of computer technology, and more particularly, to a reminding method and device.

### BACKGROUND

With development of Internet service, more and more users love and utilize applications of cloud services.

Through the cloud services, the user may back up and online manage various data (such as contacts, short messages, pictures and notes) in a mobile phone in a cloud server, such that when data content in the mobile phone is lost, the user of the mobile phone may timely retrieve it from the cloud server.

Some users of the cloud service always do not utilize relevant functions of the cloud service within a predefined time period, and this kind of users of the cloud service may be called as "inactive user of cloud service".

At present, there is no relevant solution on how to awaken the inactive user of cloud service to continue to use the functions of the cloud service.
WO 2015/078395 A1 discloses that a user type of a target user is determined based on the user data of the target user, wherein the user type includes at least a normal active user, an approximately silent user and a silent user. One of the criteria of determining a user type is if the user has not used an application for a certain period of time. If a user is an approximately silent user, related data for promoting activeness are pushed to the approximately silent user in order to prevent user churn.
US 2014/047051 A1 discloses finding active users by using a friend chain of an inactive user. WO 2013/056528 A1 discloses informing an inactive user when another user sends a message or a friend invitation to the inactive user and the inactive user is not online at that time.

### SUMMARY

In order to solve the problems existing in the related art, the present disclosure provides a reminding method and device according to the independent claims, by which the inactive user could be awakened timely. Dependent claims relate to preferred embodiments.

According to a first aspect of embodiments of the present disclosure, there is provided a reminding method, according to independent claim 1.

According to a second aspect of embodiments of the present disclosure, there is provided a reminding device applied in a server, according to independent claim 5.

According to a third aspect of embodiments of the present disclosure, there is provided a server, according to independent claim 9.

The present invention also provides a computer program, according to independent claim 10, and a computer-readable storage medium having stored thereon such a computer program, according to claim 11.

The technical solutions provided by embodiments of the present disclosure may have the following beneficial effects: if finding that there is an inactive user currently, the server in the present disclosure determines the inactive user at first, then judges whether the inactive user is in an arousable state, and if the inactive user is not in the arousable state, no operation is performed to the user; and if the inactive user is in the arousable state, reminding information is sent to the inactive user, wherein the reminding information is configured to remind the inactive user to reuse corresponding functions provided by the server. Thereby, the server may awaken the inactive user via a manner of sending reminding information, so as to remind the inactive user to use the corresponding functions of the server again, which greatly improves convenience of using the functions of the server by the user.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an illustrative flow chart of a reminding method, according to an embodiment of the present disclosure.
Fig. 2 is a schematic diagram of a specific implementing step of step S102 in Fig. 1.
Fig. 3 is a schematic diagram of a specific implementing step of step S103 in Fig. 1.
Fig. 4 is a structure diagram of a reminding device, according to an embodiment of the present disclosure.
Fig. 5 is a structure diagram corresponding to an inactive user judging module in Fig. 4.
Fig. 6 is a structure diagram corresponding to reminding information sending module in Fig. 4.
Fig. 7 is a structure diagram corresponding to an inactive user information acquiring module in Fig. 6.
Fig. 8 is a block diagram of a terminal device embodiment provided by an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

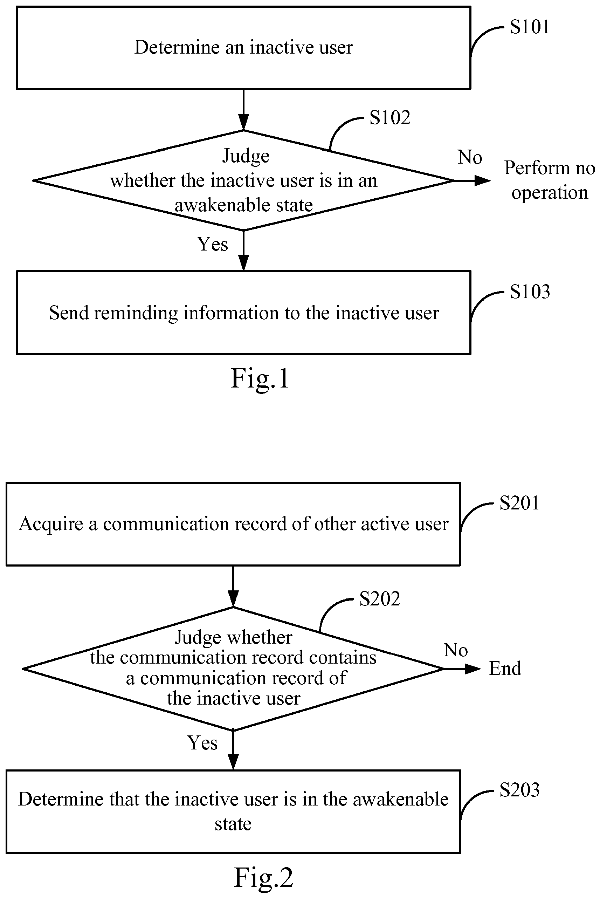

Fig. 1 is a flow chart of a reminding method, according to an exemplary embodiment of the present disclosure. As shown in Fig. 1, the reminding method is used in a cloud server, and includes the following steps.

In step S101, an inactive user is determined.

In this step, the server determines the inactive user at first. In actual applications, the server monitors a usage status of the user using a corresponding function provided by the server, and if the user continuously does not use relevant functions provided by the server within a predefined period of time, this kind of user is determined to be inactive user.

Still taking a user of cloud service as an example, the cloud server monitors a state of the user using the cloud service, and when it is found that a certain user of cloud service does not use the relevant function of the cloud service within a predefined period of time, this kind of user of cloud service is determined to be an inactive user of cloud service.

In step S102, whether the inactive user is in an arousable state (awakenable state) is judged, and if the inactive user is not in the arousable state, no operation is performed; and if the inactive user is in the arousable state, the procedure continues to perform step S103.

In this step, if an inactive user is found to be existed currently, in order to awaken the inactive user, the server needs to judge whether the current inactive user is in an arousable state. In the embodiment of the present disclosure, when the server determines that the current inactive user is in the arousable state, it is determined that the inactive user may be awakened; otherwise, when the server determines that the current inactive user is not in the arousable state, it is determined that the inactive user cannot be awakened, thereby no awakening operation is performed to this inactive user.

In step S103, reminding information is sent to the inactive user.

In this step, when determining that the inactive user is in the arousable state, the server may send the reminding information to the inactive user so as to awaken the inactive user via the reminding information.

For example, when determining that a certain inactive user of cloud service is in the arousable state, the cloud server sends the reminding information to the inactive user of cloud service, for instance, to remind the user that there is still data stored in the cloud server currently and the function of the cloud service may be reused, so as to awaken the inactive user of cloud service, and facilitate the user to manage the data backed up in the cloud server.

The technical solutions provided by embodiments of the present disclosure may have the following beneficial effects: if finding that there is an inactive user currently, the server in the present disclosure determines the inactive user at first, then judges whether the inactive user is in an arousable state, if the inactive user is not in the arousable state, no operation is performed to the user; and if the inactive user is in the arousable state, reminding information is sent to the inactive user, wherein the reminding information is configured to remind the inactive user to reuse a corresponding function provided by the server. Thereby, the server may awaken the inactive user via a manner of sending reminding information, so as to remind the inactive user to use the corresponding function of the server again, which greatly improves convenience of using the functions of the server by the user.

In one embodiment provided by the present disclosure, as shown in Fig. 2, the manner of judging whether the inactive user is in an arousable state by the server may be specifically as follows.

In step S201, a communication record of other active user is acquired.

In step S202, whether the communication record contains a communication record with the inactive user is judged; and if yes, the procedure continues to step S203.

In step S203, it is determined that the inactive user is in the arousable state.

In this embodiment, the server acquires the communication records of all the other active users in addition to the inactive user through scanning the communication records, the purpose of this operation lies in: whether the result of scanning the communication records includes a communication record between the active user and the inactive user is further judged, and if the result of scanning the communication records includes the communication record of the active user with the inactive user, it indicates that the inactive user is in the arousable state currently.

In the above embodiment, the communication record may generally include: a call record, a short message record, and/or a mail record between the active user and the inactive user.

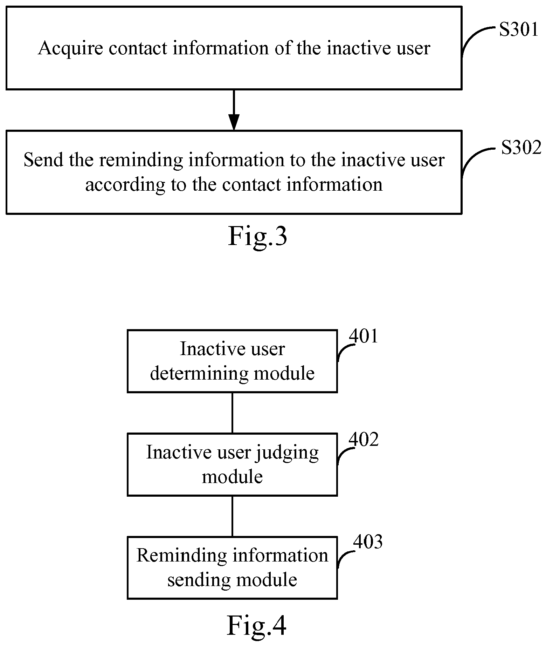

In one embodiment provided by the present disclosure, as shown in Fig. 3, the manner of sending the reminding information to the inactive user by the server may be particularly as follows.

In step 301, contact information of the inactive user is acquired.

In step 302, the reminding information is sent to the inactive user of cloud service according to the contact information.

In this embodiment, the cloud server acquires the contact information of the inactive user so as to obtain the contact of the inactive user, and then the cloud server may send the reminding information to the inactive user of cloud service according to the contact information.

In other embodiments of the present disclosure, the manner of acquiring the contact information of the inactive user may include: reading contact information provided during registration of the inactive user; and reading contact information of the inactive user in the communication record of the other active user with the inactive user.

Taking the user of cloud service as an example, the contact information of the inactive user of cloud service may be acquired based on material information provided when the user registered the cloud service. Generally, when accepting a registration service of a user, the cloud server needs to instruct the user to fill in some material information, and such material information generally contains contact information of the user for contacting with the user. In particular, when finding that a certain user is an inactive user of cloud service at present, then the cloud server reads out the material information provided when the inactive user of cloud service registered the cloud service, so as to find out the contact formation of the inactive user of cloud service from the material information.

In this implementation manner, validity of the contact information of the inactive user of cloud service is not judged, and the contact information of the inactive user of cloud service is directly acquired from the material information provided by the user when registering the cloud service. When the user registers the cloud service, the provided contact information may include several kinds of information, such as phone number information, mail information, instant messaging account information (such as Tencent QQ account) of the user, and personal account information generated by registering a public platform by the user (such as WeChat ID). In actual application scenarios, the contact information is not limited to the above forms.

After acquiring the contact information of the inactive user of cloud service, the cloud server may send the reminding information to the inactive user of cloud service according to the contact information. In particular, when the acquired contact information is the phone number information of the user, a short message may be sent to this phone number to remind the user, or the cloud customer service may dial the phone number to remind the user; and when the acquired contact information is the mail information of the user, a reminding mail may be sent to the mailbox; when the acquired contact information is the instant messaging account information of the user, an instant reminding session message may be sent to the instant messaging account information; and when the acquired contact information is the personal account information generated by registering a public platform by the user, a reminding message may be sent to the personal account information.

In particular application scenarios, the contact information provided by the user when registering the cloud service may be one or more forms among the above forms, which is not specially limited by the present disclosure.

From above, when the contact information of the inactive user of cloud service has many forms, corresponding to different forms of the contact information, the manner of sending the reminding information to the contact may be different either.

Hereinafter, still taking a particular application scenario of the cloud service as an example, detailed description is given to the above reminding procedure.

One user A registers the cloud service on the cloud server, then the cloud server monitors the state of using the cloud service by the user A, and when finding that the user does not use relevant function of the cloud service within a predefined period of time, the cloud server determines that the user A is an inactive user of cloud service. In order to awaken the user A, the cloud server needs to acquire the contact information of the user A. In one manner, the cloud server scans the communication records and acquires the communication records of all the other active users of cloud service in addition to the inactive user A of cloud service, then judges whether the communication record scanning result contains a communication record between the active user of cloud service and the user A, and if the communication record scanning result contains the communication record between the active user of cloud service and the user A, which indicates that the current contact of the user A is valid, then the contact information of the user A is exacted from the communication record between the active user of cloud service and the user A. In another manner, when the cloud server does not find the communication record between the active user of cloud service and the user A through scanning the communication records, the material information provided by the user when registering the cloud service may be read out, so as to find out the contact information of the user A from the material information. After acquiring the contact information of the user A, the cloud server may send the reminding information to the user A according to the contact information so as to remind the user A that there is still data backed up in the cloud server currently.

Corresponding to the above method embodiments, the present disclosure also provides a reminding device which may be applied in a server. Fig. 4 is one specific embodiment of the device, and the device may particularly include: an inactive user determining module 401, an inactive user judging module 402, and a reminding information sending module 403.

The inactive user determining module 401 is configured to determine an inactive user.

The inactive user judging module 402 is configured to judge whether the inactive user is in an arousable state.

The reminding information sending module 403 is configured to, if the inactive user is in the arousable state, send reminding information to the inactive user.

In the embodiments of the present disclosure, the inactive user determining module in the reminding device monitors a usage state of using corresponding functions provided by the server by the user, and when finding that the user does not use the relevant function provided by the server within a predefined period of time, determines this kind of user as the inactive user. In order to awaken the inactive user of cloud service, the reminding device needs to judge whether the current inactive user is in an arousable state via the inactive user judging module. When the server determines that the current inactive user is in the arousable state, it is determined that the inactive user may be awakened, i.e., the reminding information may be sent to the inactive user via the reminding information sending module so as to awaken the inactive user through the reminding information.

In the reminding device embodiments of the present disclosure, if finding that there is an inactive user currently, the server in the present disclosure determines the inactive user at first, then judges whether the inactive user is in an arousable state, and if the inactive user is not in the arousable state, no operation is performed to the user; and if the inactive user is in the arousable state, reminding information is sent to the inactive user, wherein the reminding information is configured to remind the inactive user to reuse corresponding functions provided by the server. Thereby, the server may awaken the inactive user via a manner of sending reminding information, so as to remind the inactive user to use the corresponding function of the server again, which greatly improves convenience of using the functions of the server by the user.

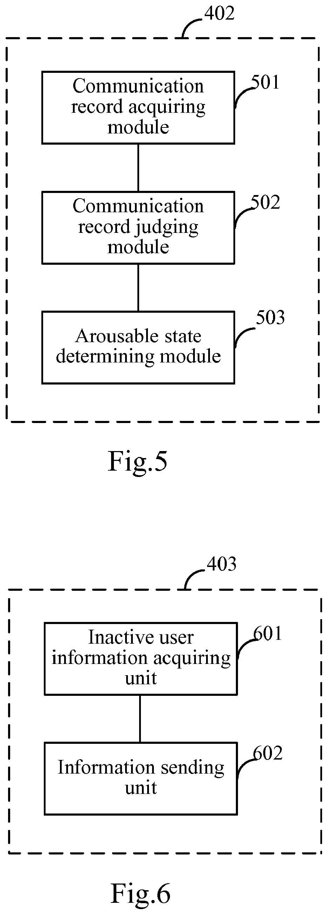

In one embodiment provided by the present disclosure, as shown in Fig. 5, in one implementing manner, the inactive user judging module may include the following execution units:
a communication record acquiring unit 501 configured to acquire a communication record of other active user;
communication record judging unit 502 configured to judge whether the communication record contains a communication record with the inactive user, and if yes, trigger an arousable state determining module; and
the arousable state determining unit 503 configured to determine that the inactive user is in the arousable state.

In this embodiment, the communication records of all the other active users in addition to the inactive user are acquired through scanning the communication record, the purpose of this operation lies in: whether the result of scanning the communication records includes a communication record between the active user and the inactive user is further judged, and if the result of scanning the communication records includes the communication record of the active user with the inactive user, it indicates that the inactive user is in the arousable state currently.

In the above embodiment, the communication record may generally include: a call record, a short message record, and/or a mail record between the active user and the inactive user.

In one embodiment provided by the present disclosure, as shown in Fig. 6, in one implementing manner, the reminding information sending module may include the following execution units:
an inactive user information acquiring unit 601 configured to acquire contact information of the inactive user; and
an information sending unit 602 configured to send the reminding information to the inactive user according to the contact information.

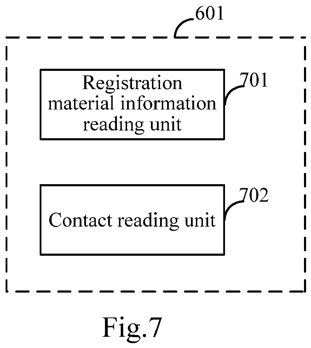

Further, in other embodiments of the present disclosure, as shown in Fig. 7, in one implementing manner, the inactive user information acquiring unit may include the following execution units:
a registration material information reading unit 701 configured to read contact information provided during registration of the inactive user; and
a contact reading unit 702 configured to read contact information of the inactive user in the communication record of the other active user with the inactive user.

Correspondingly, the embodiments of the present disclosure also provides a server, and the server may include: a processor; and a memory for storing instructions executable by the processor; wherein the processor is configured to:
determine an inactive user;
judge whether the inactive user is in an arousable state; and
if the inactive user is not in the arousable state, perform no operation; and if the inactive user is in the arousable state, send reminding information to the inactive user.

With respect to the devices in the above embodiments, the specific manners for performing operations for individual modules therein have been described in detail in the embodiments regarding the methods, which will not be elaborated herein.

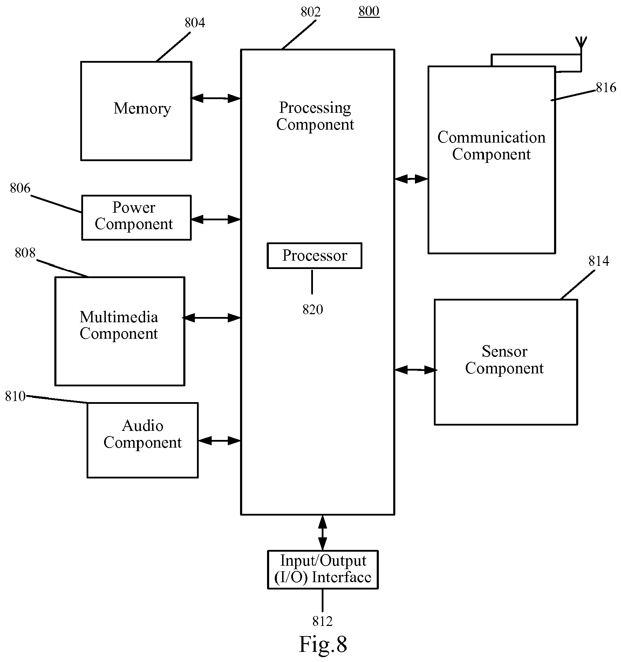

Fig. 8 is a block diagram of a device 800 for controlling a terminal device to access a wireless LAN, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

## Claims

1. A computer-implemented reminding method, comprising:
determining (S101) an inactive user, wherein a user is determined to be an inactive user, if he or she is a user of a cloud service, who does not utilize relevant functions of the cloud service within a predefined time period;
judging (S102) whether the inactive user is in an arousable state; and
if the inactive user is not in the arousable state, performing no operation; and if the inactive user is in the arousable state, sending (S103) reminding information to the inactive user, that reminds the inactive user to reuse a corresponding function provided by the server, **characterized in that**
the sending (S103) reminding information to the inactive user comprises
- acquiring (S301) contact information of the inactive user by
scanning the communication records and acquiring (S201) communication records of all the other active users of the cloud service in addition to the inactive user of the cloud service;
judging (S202) whether the communication records scanning result contains a communication entry between an active user of the cloud service and the inactive user; and,
if yes, extracting the contact information for the inactive user from the communication entry, and, in the step of judging (S102) whether the inactive user is in the arousable state, determining (S203) that the inactive user is in the arousable state;
- sending (S302) the reminding information to the inactive user according to the contact information.

2. The method of claim 1, wherein the communication record comprises at least one of a call record, a short message record, and a mail record.

3. The method of claim 1 or 2, wherein the acquiring (S301) contact information of the inactive user comprises:
reading contact information provided during registration of the inactive user; and
reading contact information of the inactive user in the communication entry of the other active user with the inactive user.

4. The method of claim 3, wherein the contact information comprises at least one of a phone number information, mail information, instant messaging account information, and personal account information generated by registering a public platform by the user.

5. A reminding device applied in a server, comprising:
an inactive user determining module (401) configured to determine an inactive user, wherein a user is determined to be an inactive user, if he or she is a user of a cloud service, who does not utilize relevant functions of the cloud service within a predefined time period;
an inactive user judging module (402) configured to judge whether the inactive user is in an arousable state; and
a reminding information sending module (403) configured to, if the inactive user is in the arousable state, send reminding information to the inactive user, that reminds the inactive user to reuse a corresponding function provided by the server,
**characterized in that**
the inactive user judging module (402) comprises:
a communication record acquiring unit (501) configured to acquire communication records of all the other active users of the cloud service in addition to the inactive user of the cloud service, wherein the communication records of all the other users are acquired through scanning the communications record;
a communication record judging unit (502) configured to judge whether the result of scanning the communication record contains a communication entry between an active user of the cloud service and the inactive user, and if yes, trigger an arousable state determining module, wherein; and
an arousable state determining module (503) configured to determine that the inactive user is in the arousable state;
and **in that** the reminding information sending module (403) comprises:
- an inactive user information acquiring unit (601) configured to acquire contact information of the inactive user from the communication entry; and
- an information sending unit (602) configured to send the reminding information to the inactive user according to the contact information.

6. The device of claim 5, wherein the communication record comprises at least one of a call record, a short message record, and a mail record.

7. The device of claim 5 or 6, wherein the inactive user information acquiring unit (601) comprises:
a registration material information reading unit (701) configured to read contact information provided during registration of the inactive user; and
a contact reading unit (702) configured to read contact information of the inactive user in the communication entry of the other active user with the inactive user.

8. The device of claim 7, wherein the contact information comprises at least one of a phone number information, mail information, instant messaging account information, and personal account information generated by registering a public platform by the user.

9. A server, comprising: a processor (820); and a memory (804) for storing instructions executable by the processor (820); wherein the server is configured to perform a method according to any one of claims 1 to 4.

10. A computer program, which when executed on a processor of a server, performs a method according to any one of claims 1 to 4.

11. A computer-readable storage medium having stored thereon a computer program according to claim 10.

## Patentansprüche

1. Computer-implementiertes Erinnerungsverfahren, umfassend:
Bestimmen (S101) eines inaktiven Benutzers, wobei ein Benutzer als inaktiver Benutzer bestimmt wird, wenn er oder sie ein Benutzer eines Cloud-Dienstes ist, der relevante Funktionen des Cloud-Dienstes innerhalb einer vordefinierten Zeitspanne nicht nutzt;
Beurteilen (S102), ob der inaktive Benutzer in einem aufrufbaren Zustand ist; und wenn der inaktive Benutzer nicht in dem aufrufbaren Zustand ist, Durchführen keiner Operation; und wenn der inaktive Benutzer in dem aufrufbaren Zustand ist, Senden (S103) von Erinnerungsinformationen an den inaktiven Benutzer, die den inaktiven Benutzer daran erinnern, eine entsprechende Funktion, die von dem Server bereitgestellt wird, wieder zu verwenden, **dadurch gekennzeichnet, dass**
das Senden (S103) von Erinnerungsinformation an den inaktiven Benutzer folgendes umfasst:
- Erfassen (S301) von Kontaktinformationen des inaktiven Benutzers durch
Scannen von Kommunikationsaufzeichnungen und Erfassen (S201) von Kommunikationsaufzeichnungen aller anderen aktiven Benutzer des Cloud-Dienstes zusätzlich zu dem inaktiven Benutzer des Cloud-Dienstes;
Beurteilen (S202), ob das Ergebnis des Scannens der Kommunikationsaufzeichnungen einen Kommunikationseintrag zwischen einem aktiven Benutzer des Cloud-Dienstes und dem inaktiven Benutzer enthält; und,
wenn ja, Extrahieren der Kontaktinformationen für den inaktiven Benutzer aus dem Kommunikationseintrag, und, in dem Schritt des Beurteilens (S102), ob der inaktive Benutzer in dem aufrufbaren Zustand ist, Bestimmen (S203), dass der inaktive Benutzer in dem aufrufbaren Zustand ist;
- Senden (S302) der Erinnerungsinformation an den inaktiven Benutzer gemäß der Kontaktinformation.

2. Verfahren nach Anspruch 1, wobei die Kommunikationsaufzeichnungen mindestens eines von einer Anrufaufzeichnung, einer Kurznachrichtenaufzeichnung und einer Mailaufzeichnung umfasst.

3. Verfahren nach Anspruch 1 oder 2, wobei das Erfassen (S301) von Kontaktinformationen des inaktiven Benutzers folgendes umfasst:
Lesen von Kontaktinformationen, die während der Registrierung des inaktiven Benutzers bereitgestellt wurden; und
Lesen von Kontaktinformationen des inaktiven Benutzers in dem Kommunikationseintrag des anderen aktiven Benutzers mit dem inaktiven Benutzer.

4. Verfahren nach Anspruch 3, wobei die Kontaktinformationen mindestens eine der folgenden Informationen umfassen: Telefonnummerninformationen, E-Mail-Informationen, Instant-Messaging-Kontoinformationen und persönliche Kontoinformationen, die durch die Registrierung einer öffentlichen Plattform durch den Benutzer erzeugt wurden.

5. Erinnerungsvorrichtung, die in einem Server angewendet wird, umfassend:
ein Modul (401) zum Bestimmen eines inaktiven Benutzers, das so konfiguriert ist, dass es einen inaktiven Benutzer bestimmt, wobei ein Benutzer als inaktiver Benutzer bestimmt wird, wenn er oder sie ein Benutzer eines Cloud-Dienstes ist, der relevante Funktionen des Cloud-Dienstes innerhalb einer vordefinierten Zeitspanne nicht nutzt;
ein Modul (402) zum Beurteilen eines inaktiven Benutzers, das konfiguriert ist, um zu beurteilen, ob der inaktive Benutzer in einem aufrufbaren Zustand ist; und
ein Modul (403) zum Senden von Erinnerungsinformationen, das so konfiguriert ist, dass es, wenn der inaktive Benutzer in dem aufrufbaren Zustand ist, Erinnerungsinformationen an den inaktiven Benutzer sendet, die den inaktiven Benutzer daran erinnern, eine entsprechende Funktion, die von dem Server bereitgestellt wird, erneut zu nutzen,
**dadurch gekennzeichnet, dass**
das Modul zur Beurteilung des inaktiven Benutzers (402) folgendes aufweist:
eine Kommunikationsaufzeichnungs-Erfassungseinheit (501), die konfiguriert ist, um Kommunikationsaufzeichnungen aller anderen aktiven Benutzer des Cloud-Dienstes zusätzlich zu dem inaktiven Benutzer des Cloud-Dienstes zu erfassen, wobei die Kommunikationsaufzeichnungen aller anderen Benutzer durch Scannen der Kommunikationsaufzeichnungen erfasst werden;
eine Kommunikationsaufzeichnungs-Beurteilungseinheit (502), die konfiguriert ist, um zu beurteilen, ob das Ergebnis des Scannens der Kommunikationsaufzeichnung einen Kommunikationseintrag zwischen einem aktiven Benutzer des Cloud-Dienstes und dem inaktiven Benutzer enthält, und wenn ja, ein Modul zum Bestimmen eines aktivierbaren Zustands auszulösen, wobei; und
ein Bestimmungsmodul (503) für den aufrufbaren Zustand, das konfiguriert ist,
um zu bestimmen, dass der inaktive Benutzer in dem aufrufbaren Zustand ist; und dass das Erinnerungsinformations-Sendemodul (403) folgendes aufweist:
- eine Einheit (601) zum Erfassen von Informationen des inaktiven Benutzers, die so konfiguriert ist, dass sie Kontaktinformationen des inaktiven Benutzers aus dem Kommunikationseintrag erfasst; und
- eine Informationssendeeinheit (602), die konfiguriert ist, um die Erinnerungsinformation an den inaktiven Benutzer gemäß der Kontaktinformation zu senden.

6. Vorrichtung nach Anspruch 5, wobei die Kommunikationsaufzeichnung mindestens eins von einer Aufrufaufzeichnung, einer Kurznachrichtenaufzeichnung und einer Mailaufzeichnung aufweist.

7. Vorrichtung nach Anspruch 5 oder 6, wobei die Einheit (601) zum Erfassen von Informationen des inaktiven Benutzers folgendes umfasst:
eine Registrierungsmaterial-Informationsleseeinheit (701), die konfiguriert ist, um Kontaktinformationen zu lesen, die während der Registrierung des inaktiven Benutzers bereitgestellt werden; und
eine Kontaktleseeinheit (702), die so konfiguriert ist, dass sie Kontaktinformationen des inaktiven Benutzers in dem Kommunikationseintrag des anderen aktiven Benutzers mit dem inaktiven Benutzer liest.

8. Vorrichtung nach Anspruch 7, wobei die Kontaktinformation mindestens eine von einer Telefonnummerninformation, einer Mailinformation, einer Instant-Messaging-Kontoinformation und einer persönlichen Kontoinformation, die durch die Registrierung einer öffentlichen Plattform durch den Benutzer erzeugt wurde, aufweist.

9. Server, umfassend: einen Prozessor (820); und einen Speicher (804) zum Speichern von Befehlen, die durch den Prozessor (820) ausführbar sind; wobei der Server konfiguriert ist, um ein Verfahren nach einem der Ansprüche 1 bis 4 durchzuführen.

10. Computerprogramm, das, wenn es auf einem Prozessor eines Servers ausgeführt wird, ein Verfahren nach einem der Ansprüche 1 bis 4 durchführt.

11. Computerlesbares Speichermedium, auf dem ein Computerprogramm nach Anspruch 10 gespeichert ist.

## Revendications

1. Procédé de rappel mis en œuvre par ordinateur, comportant les étapes consistant à :
déterminer (S101) un utilisateur inactif, dans lequel un utilisateur est déterminé comme étant un utilisateur inactif, s'il est un utilisateur ou si elle est une utilisatrice d'un service en nuage, qui n'utilise pas de fonctions pertinentes du service en nuage sur une période de temps prédéfinie ;
juger (S102) si l'utilisateur inactif est dans un état éveillable ; et
si l'utilisateur inactif n'est pas dans l'état éveillable, n'exécuter aucune opération ; et si l'utilisateur inactif est dans l'état éveillable, envoyer (S103) des informations de rappel à l'utilisateur inactif, qui rappellent à l'utilisateur inactif de réutiliser une fonction correspondante fournie par le serveur, **caractérisé en ce que** l'envoi (S103) d'informations de rappel à l'utilisateur inactif comporte les étapes consistant à :
- acquérir (S301) des informations de contact de l'utilisateur inactif
en balayant les enregistrements de communication et en acquérant (S201) des enregistrements de communication de tous les autres utilisateurs actifs du service en nuage en plus de l'utilisateur inactif du service en nuage ;
en jugeant (S202) si le résultat du balayage des enregistrements de communication contient une entrée de communication entre un utilisateur actif du service en nuage et l'utilisateur inactif ; et,
si oui, en extrayant les informations de contact pour l'utilisateur inactif de l'entrée de communication, et, à l'étape consistant à juger (S102) si l'utilisateur inactif est dans l'état éveillable, déterminer (S203) que l'utilisateur inactif est dans l'état éveillable,
- envoyer (S302) les informations de rappel à l'utilisateur inactif d'après les informations de contact.

2. Procédé selon la revendication 1, dans lequel l'enregistrement de communication comporte au moins un élément parmi un enregistrement d'appel, un enregistrement de minimessage et un enregistrement de courrier électronique.

3. Procédé selon la revendication 1 ou 2, dans lequel l'acquisition (S301) des informations de contact de l'utilisateur inactif comporte les étapes consistant à :
lire des informations de contact fournies pendant l'inscription de l'utilisateur inactif ; et
lire des informations de contact de l'utilisateur inactif dans l'entrée de communication de l'autre utilisateur actif avec l'utilisateur inactif.

4. Procédé selon la revendication 3, dans lequel les informations de contact comportent au moins un élément parmi des informations de numéro de téléphone, des informations de courrier électronique, des informations de compte de messagerie instantanée et des informations de compte personnel générées lors de l'inscription de l'utilisateur sur une plate-forme publique.

5. Dispositif de rappel appliqué dans un serveur, comportant :
un module de détermination d'utilisateur inactif (401), configuré pour déterminer un utilisateur inactif, dans lequel un utilisateur est déterminé comme étant un utilisateur inactif, s'il est un utilisateur ou si elle est une utilisatrice d'un service en nuage, qui n'utilise pas de fonctions pertinentes du service en nuage sur une période de temps prédéfinie ;
un module de jugement d'utilisateur inactif (402) configuré pour juger si l'utilisateur inactif est dans un état éveillable ; et
un module d'envoi d'informations de rappel (403) configuré pour, si l'utilisateur inactif est dans l'état éveillable, envoyer des informations de rappel à l'utilisateur inactif, qui rappellent à l'utilisateur inactif de réutiliser une fonction correspondante fournie par le serveur,
**caractérisé en ce que**
le module de jugement d'utilisateur inactif (402) comporte :
une unité d'acquisition d'enregistrement de communication (501) configurée pour acquérir des enregistrements de communication de tous les autres utilisateurs actifs du service en nuage en plus de l'utilisateur inactif du service en nuage, dans lequel les enregistrements de communication de tous les autres utilisateurs sont acquis en balayant l'enregistrement de communication ;
une unité de jugement d'enregistrement de communication (502) configurée pour juger si le résultat du balayage de l'enregistrement de communication contient une entrée de communication entre un utilisateur actif du service en nuage et l'utilisateur inactif, et si oui, déclencher un module de détermination d'état éveillable, dans lequel ; et
un module de détermination d'état éveillable (503) configuré pour déterminer que l'utilisateur inactif est dans l'état éveillable ;
et **en ce que** le module d'envoi d'informations de rappel (403) comporte :
- une unité d'acquisition d'informations d'utilisateur inactif (601) configurée pour acquérir des informations de contact de l'utilisateur inactif à partir de l'entrée de communication ; et
- une unité d'envoi d'informations (602) configurée pour envoyer les informations de rappel à l'utilisateur inactif d'après les informations de contact.

6. Dispositif selon la revendication 5, dans lequel l'enregistrement de communication comporte au moins un élément parmi un enregistrement d'appel, un enregistrement de minimessage et un enregistrement de courrier électronique.

7. Dispositif selon la revendication 5 ou 6, dans lequel l'unité d'acquisition d'informations d'utilisateur inactif (601) comporte :
une unité de lecture d'informations d'inscription importantes (701) configurée pour lire des informations de contact fournies pendant l'inscription de l'utilisateur inactif ; et
une unité de lecture d'informations de contact (702) configurée pour lire des informations de contact de l'utilisateur inactif dans l'entrée de communication de l'autre utilisateur actif avec l'utilisateur inactif.

8. Dispositif selon la revendication 7, dans lequel les informations de contact comportent au moins un élément parmi des informations de numéro de téléphone, des informations de courrier électronique, des informations de compte de messagerie instantanée et des informations de compte personnel générées lors de l'inscription de l'utilisateur sur une plate-forme publique.

9. Serveur, comportant : un processeur (820) ; et une mémoire (804) pour stocker des instructions exécutables par le processeur (820) ; dans lequel le serveur est configuré pour mettre en œuvre un procédé selon l'une quelconque des revendications 1 à 4.

10. Programme informatique qui, lorsqu'il est exécuté sur un processeur d'un serveur, met en œuvre un procédé selon l'une quelconque des revendications 1 à 4.

11. Support de stockage lisible par ordinateur ayant un programme informatique selon la revendication 10 stocké sur celui-ci.
